# EUROPEAN PATENT SPECIFICATION

(11) **EP 1 499 479 B1**
(45) Date of publication and mention of the grant of the patent: **09.11.2011**
(21) Application number: 03728556.6
(22) Date of filing: 28.04.2003
(51) Int. Cl.: B23C 5/08, B23C 5/24

(54) **CUTTING TOOL**
SCHNEIDWERKZEUG
OUTIL DE COUPE

(30) Priority: 29.04.2002 US 134328; 25.04.2003 US 423328
(43) Date of publication of application: 26.01.2005
(60) Divisional application: 11005659.5
(73) Proprietor: KENNAMETAL INC., Latrobe, PA 15650-0231 (US)
(72) Inventor: GAMBLE, Kevin, M., Stahlstown, PA 15687 (US); LONG, Thomas, J., II, Greensburg, PA 15601 (US); WELLEIN, Georg, H., 91315 Hoechstadt (DE)
(74) Representative: Prinz & Partner
(86) International application number: PCT/US2003/013034
(87) International publication number: WO 2003/092969

(56) References cited:
- EP-A- 0 873 808
- FR-E- 84 512
- GB-A- 935 127
- US-A- 3 802 043
- US-A- 3 854 511
- US-A- 4 474 512
- US-A- 4 566 826
- US-A- 5 529 439
- US-A- 5 667 343
- US-B1- 6 354 772

## Description

This invention generally relates to a cutting tool. More particularly, this invention relates to a rotary milling cutter or to a slotting cutter having a cartridge assembly for holing a cutting insert for removing material from a workpiece. The cartridge assembly may include a device for adjusting the position of the cutting edge of an insert mounted on the body of a milling cutter.

A milling cutter is a rotary cutting tool having a cutter body with one or more circumferentially spaced recesses known as "pockets", into which are mounted cutting inserts. The cutting inserts intermittently engage a workpiece to remove material from the workpiece. Each insert is secured into its respective pocket by means of a clamping screw, which extends through a centrally located hole in the insert. While pockets and clamping screws provide a secure mount for the inserts during a cutting operation, they do not, unfortunately, provide a system operator with a suitable means for adjusting the relative position of the cutting edges of the inserts mounted in the pockets. For a more detailed description of a milling cutter reference is made to U.S. Patent No. 5,102,268.

Devices for adjusting the position of cutting inserts in milling cutters and other tools are known in the art. Various adjustment devices have been designed with means for adjusting the position of a cutting insert relative to the cutter body. For example, see U.S. Patent Nos. 5,800,079; 6,004,080 and 4,692,069.
US 5,667,343 discloses a milling cutter tool for chip-breaking machines according to the preamble of claim 1. A milling cutter body comprises a number of insert cassettes fastened to the cutter body by screws. The screw holes are formed to be elongate in order to allow axial adjustment of the cutting edges. An eccenter tap is provided with a head which cooperates with a recess in the cassette to allow adjustment of the position of the cassette relative to the cutter body.

Nonetheless, there remains a need for an improved milling cutter. There further remains a need for a milling cutter that may include a device for making adjustments to the lateral position of cutting inserts mounted around a cutter body or other tool that is easier and simpler than prior art adjusting devices. Ideally, such an adjusting device would be able to withstand the harsh operating environment encountered during a machining operation.

According to the present invention, a cutting tool is provided as defined in claim 1.

The cutting tool includes a cutter body having at least one pocket therein adapted to receive a cutting insert cartridge. The at least one pocket preferably has a forward wall, a rearward waH and a bottom wall. The bottom wall extends between the forward wall and the rearward wall and is arranged at an angle greater than 90 degrees relative to the forward wall and is arranged at an angle less than 90 degrees relative to the rearward wall. The insert cartridge assembly includes a cartridge and preferably a clamping wedge. The cartridge preferably has a front surface, a rear surface and a bottom surface and an insert pocket for receiving the cutting insert. The bottom surface is shaped to correspond to the bottom wall of the pocket, and the rear surface is shaped to correspond to the rearward wall of the pocket. The preferred clamping wedge is of a dove tail shape and includes a forward wedge surface and a rear wedge surface. The forward wedge surface is in abutment with the forward wall of the cartridge pocket and the rear wedge surface is in abutment with the front surface of the cartridge. The clamping wedge assists in preventing the cartridge from moving radially from the cartridge pocket.

The cutting tool according to the invention includes a position-adjusting device includes an eccentric protrusion for engaging the cartridge. The device is preferably displaceable in opposing directions to displace the protrusion to cause movement of the cartridge in opposing directions.

The position-adjusting device comprises a body member, for example a cylindrical body member, supported in a fixed axial relation in the bore. The eccentric protrusion extends from the cylindrical body member. The cylindrical body member is preferably displaceable in opposing directions to displace the protrusion and move the cartridge in opposing directions.

The cylindrical body member is in a fixed axial relation within the bore in the cutter body. The cylindrical body member has an end from which extends an eccentric protrusion. The protrusion engages a slot in a rear surface of the cartridge. The cylindrical body member is preferably rotatable in opposing directions to displace the protrusion in the slot and move the cartridge in opposing directions.

The cartridge and insert may be formed as a unitary member, or a cutting edge of, for example, polycrystalline diamond, may be formed directly on the cartridge.

In one embodiment of the invention, a clamping wedge is provided in the pocket for clamping the cartridge in the pocket. In an alternate embodiment, the clamping wedge may be omitted and the cartridge can be secured to the pocket directly by a fastener which passes, for example, through a bore through the cartridge into the cutter body.

Advantageously, the cutting tool is provided with an adjustment device that is easily and highly controllable for fine position adjustments of a cartridge which may be used independently of any other means for adjustment.

### BRIEF DESCRIPTION OF THE DRAWINGS

The present invention, as well as the advantages derived therefrom, will become clear from the following detailed description made with reference to the drawings in which:

FIG. 1 is a partially exploded front perspective view of an embodiment of a cutting tool in accordance with the present invention that includes insert cartridge adjusting devices;

FIG. 2 is a partial cutaway side elevational view of the cutting tool illustrated in FIG. 1 with some insert cartridge adjusting devices and wedge screws shown in full;

FIG. 3 is an enlarged partial cutaway side elevational view of the cutting tool illustrated in FIGS. 1 and 2;

FIG. 4 is an enlarged front perspective view of the insert cartridge adjusting device illustrated in FIGS. 1 - 3;

FIG. 5 is a rear perspective view of the insert cartridge adjusting device illustrated in FIG. 4;

FIG. 6 is an enlarged rear perspective view of the insert cartridge illustrated in FIGS. 1 - 3;

FIGS. 7A through 7C are enlarged diagrammatic representations of the adjusting devices and succeeding right and left insert cartridges of the cutting tool illustrated in FIG. 1 showing the insert cartridges in three different positions;

FIG. 8 is a partially exploded front perspective view of a cutting tool not falling under the scope of the claims that includes an insert cartridge assembly, provided as a useful example to enable understanding of the invention;

FIG. 9 is a partial cutaway side elevational view of the cutting tool illustrated in FIG. 8;

FIG. 10 is an enlarged partial cutaway side elevational view of the cutting tool illustrated in FIGS. 8 and 9;

FIG. 11 is an enlarged rear perspective view of the insert cartridge illustrated in FIGS. 8 - 10; and

FIGS. 12 is an enlarged diagrammatic representation of and succeeding right and left insert cartridges of the cutting tool illustrated in FIG. 8.

### DESCRIPTION OF THE PREFERRED EMBODIMENT

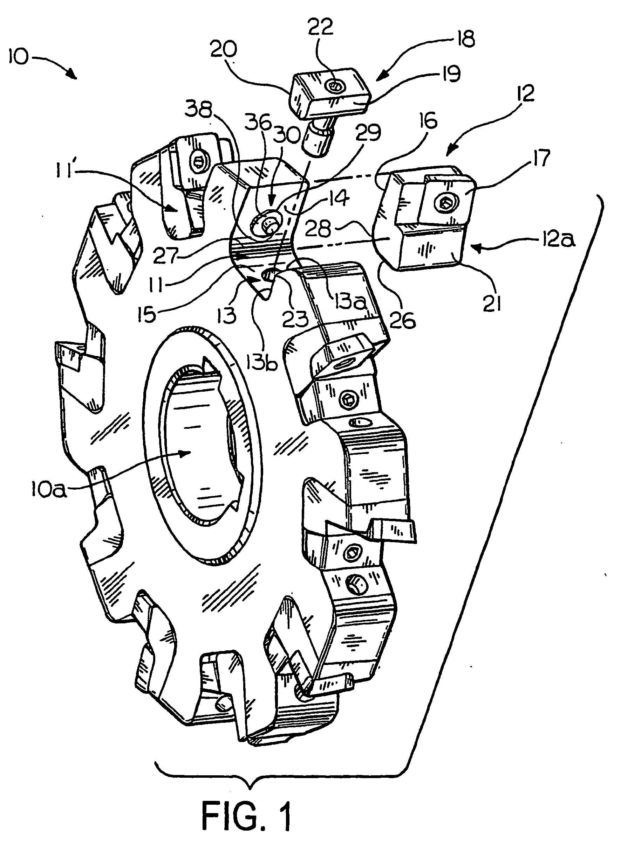

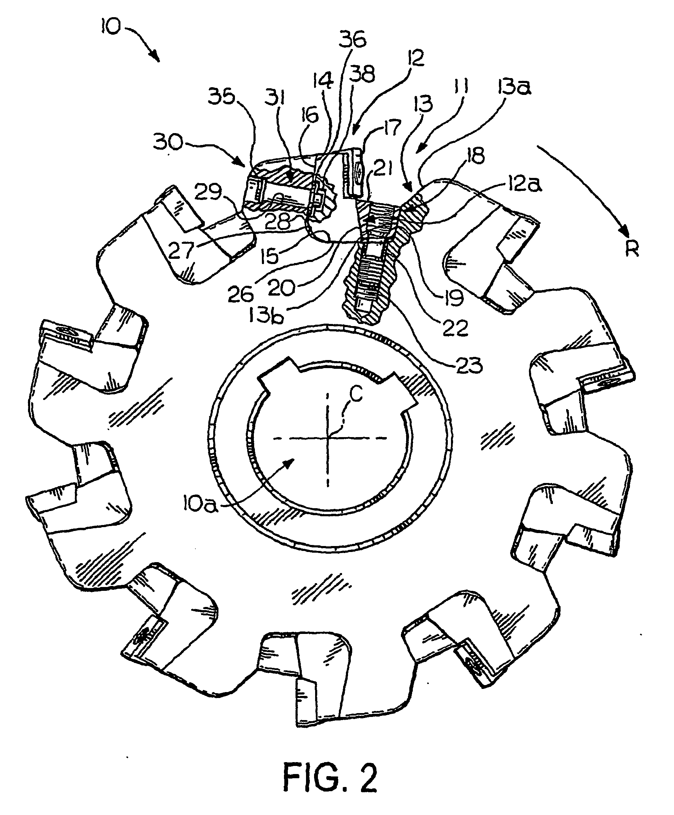

With reference now to FIGS. 1 - 3, wherein like numerals designate like components throughout all of the several figures, a cutter body of a rotary milling cutter or slotter is denoted by reference numeral 10. The cutter body 10 has a central core portion 10a and a plurality of circumferentially spaced, radially outwardly open recesses or cartridge pockets 11 located in an outer periphery of the body 10. The cartridge pockets 11 are provided for the receipt of partially wedge-shaped cartridges 12 (i.e., insert cartridges). The width of each cartridge 12 (i.e., the dimension parallel to a central axis C (shown in FIG. 2) of rotation of the body 10) is in one embodiment less than the width of the milling cutter body 10 or, in a preferred embodiment equivalent to the entire width of the milling cutter body 10.

A radially inner wedge-shaped portion of the cartridge is denoted by numeral 12a (shown in FIG. 2). The milling cutter body 10 is arranged for rotation around the central axis C in direction R (i.e., in a clockwise direction when viewing FIG. 2). The cartridge pockets 11 are evenly distributed along the periphery of the cutter body 10. In the embodiment shown, ten cartridge pockets 11 are provided. It is to be understood, however, that the cartridge pockets 11 in certain cases can be unevenly distributed around the periphery of the milling cutter body. Moreover, a greater or lesser number of cartridge pockets 11 can be provided.

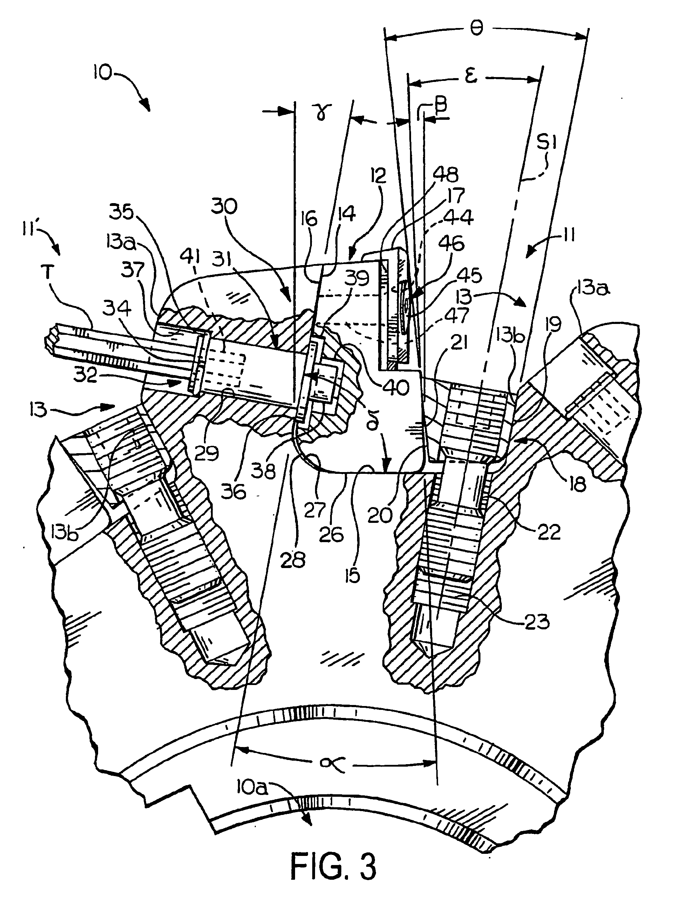

A leading or forward wall 13 of each cartridge pocket 11, as seen in the rotary direction R, comprises two surfaces 13a and 13b. The surfaces 13a and 13b may be arranged at an angle relative to each other or the surfaces 13a and 13b may be coplanar. A trailing or rearward wall 14 of the cartridge pocket 11 has a generally flat surface. A bottom of the cartridge pocket 11 is defined by a bottom wall 15, which extends between the forward and rearward walls 13 and 14. The rearward wall 14 of the cartridge pocket 11 is adapted to engage a rear surface 16 of the cartridge 12. The bottom wall 15 of the cartridge pocket 11 is arranged at an angle greater than 90 degrees relative to a radially inner surface 13b of the forward wall 13 of the cartridge pocket 11. The bottom wall 15 is oriented at an angle δ (shown in FIG. 3) less than 90 degrees relative to the rear wall 14 of the same cartridge pocket 11.

A clamping means for the cartridge 12 is in the form of a clamping wedge 18 arranged radially inward of a cutting edge of an insert 17 when the insert is seated on the cartridge 12. A leading or forward wedge surface 19 of the wedge 18 (with reference to the rotary direction R) is arranged in abutment with the radially inner surface 13b of the forward wall 13 of the cartridge pocket 11. A trailing or rear wedge surface 20 of the wedge 18 is arranged in abutment with a leading or front surface 21 of the cartridge 12. The wedge 18 is displaced along the surface 13b of the forward wall 13 of the cartridge pocket 11 upon tightening a fastener such as a threaded clamp screw 22. The screw 22 is threadably engaged in a corresponding threaded bore 23 in the cartridge pocket 11. The bore 23 can extend all the way through to the core portion 10a of the cutter body 10. The clamp screw 22 is provided with right hand threads along the bottom of the screw and left hand threads along the top of the screw so that the clamp wedge 18 can be positively displaced in both the clamping and unclamping directions (i.e., in opposing radial directions when viewing FIG. 1) as the clamp screw is threaded or unthreaded within the block. Loosening of the cartridge 12 is accomplished by an unscrewing of the clamp screw 22.

The bottom surface 26 of the cartridge 12 is shaped to correspond with the bottom wall 15 of the cartridge pocket 11. When the cartridge 12 is installed in the cartridge pocket 11, the bottom wall 15 of the cartridge pocket 11 engages the bottom surface 26 of the cartridge 12. In a preferred embodiment, in order to reduce stress sustained by the cartridge 12 during rotation of the cutter body 10 and the cutting process, the rearward and bottom walls 14 and 15 of the cartridge pocket 11 and the rear and bottom surfaces 16 and 26 of the cartridge 12 intersect at rounded corners 27 and 28. The radii of the corners 27 and 28 are limited by intrusion of a thru-bore 29 that extends through the cutter body 10. The bore 29 extends between the rearward wall 14 of the cartridge pocket 11 and a radially outer surface 13a of the forward wall 13 of a trailing cartridge pocket 11'. In a preferred embodiment, the bore 29 is oriented perpendicularly to the plane of the rearward wall 14 of the cartridge pocket 11.

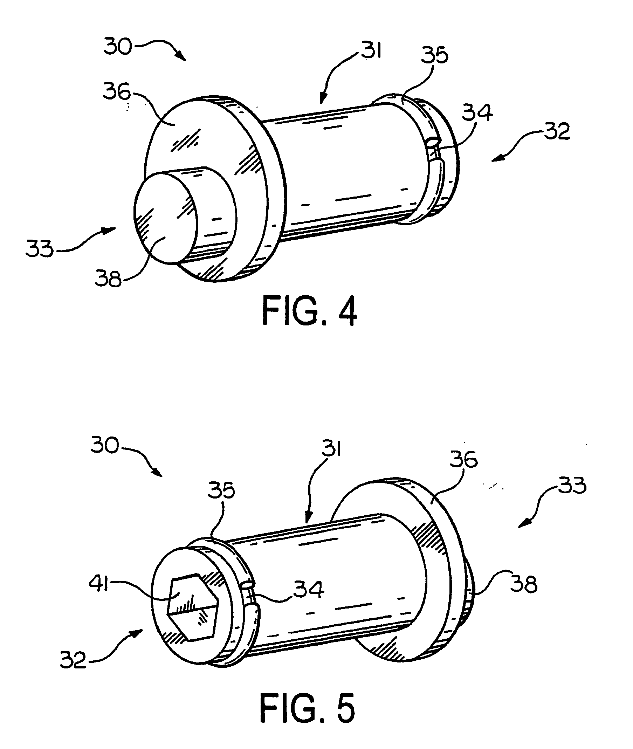

The thru-bore 29 supports an adjustment device for mechanically adjusting the relative position of the cartridge in opposing directions with respect to the cutter body. As illustrated in FIGS. 4 and 5, the adjustment device comprises a cam device 30 having a body member 31. The body member 31 is not threaded so that displacement of the cylindrical body 31 along its axis is not caused. In a preferred embodiment the body member 31 is cylindrical. The body member 31 has two opposing ends 32 and 33. An annular groove 34 is provided proximate one end 32 of the body member 31. A snap ring 35 is carried by the annular groove 34. A flange 36 is provided at an opposite end 33 of the body member 31 to restrain axial movement of the adjustment device within the bore 29. The through bore 29 is provided with a stepped radius 37 (shown in FIG. 3) nearest the forward wall 13 of the trailing cartridge pocket 11' to provide two concentric openings of varying diameters. The snap ring 35 engages a shoulder defined between the through bore 29 and the stepped radius 37 and the flange 36 engages the rearward wall 14 of the cartridge pocket 11. The snap ring 35 and the flange 36 prevent movement of the cylindrical body 31 along the axis of the bore 29.

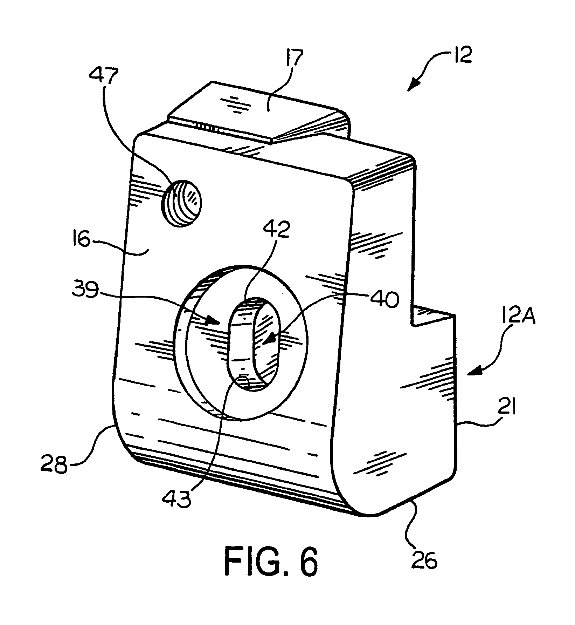

As shown in FIGS. 4 and 5, the cam device 30 has an eccentric protrusion 38 extending from the end 33 of the cylindrical body 31 supporting the flange 36. The eccentric protrusion 38 is preferably cylindrical in shape. However, the protrusion 38 may be of most any suitable shape to engage the cartridge 12. More particularly, the rear surface 16 of the cartridge 12 has a recess 39 therein (as illustrated in FIG. 6) for receiving the flange 36 and a radially extending slot 40 therein for receiving the protrusion 38. The end 32 of the cylindrical body 31 supporting the snap ring 35 has a tool engaging recess 41. The tool engaging recess 41 is adapted to receive a tool T (shown in FIG. 3). The tool T is provided for rotating the cylindrical body 31 about its axis of rotation to axially displace the cartridge 12, i.e., to displace the cartridge 12 along a line parallel to the central axis C of the cutter body 10. The recess 39 in the rear surface 16 of the cartridge 12 has a larger dimension than the flange 36 to permit the cylindrical body 31 to rotate and the eccentric protrusion 38 to travel in the slot 40.

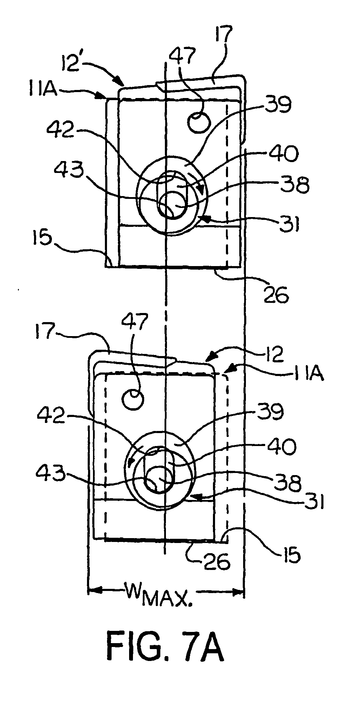

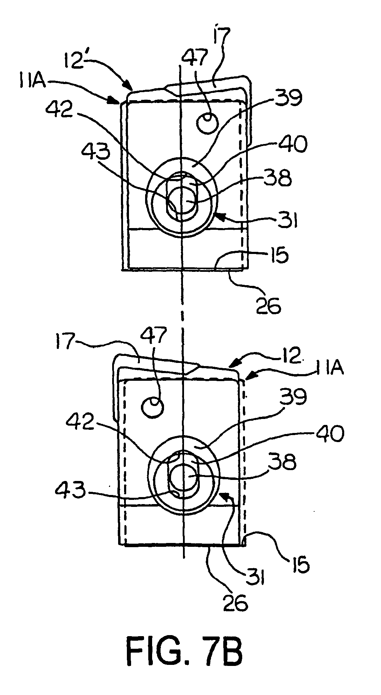

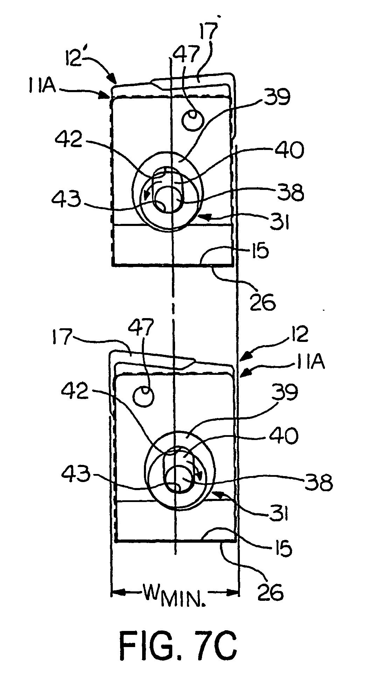

The cylindrical body 31 is adapted to rotate less than 360 degrees. In a preferred embodiment of the invention, the cylindrical body 31 is adapted to rotate about 180 degrees. Rotation of the cylindrical body 31 can be limited by orienting the slot 40 in the rear surface 16 of the cartridge 12 so that the protrusion 38 of the cam device 30 can pass through only a radially outer end 42 of the slot 40 (e.g., the top end when viewing FIG. 7B). The slot 40 is sufficiently long or large to provide clearance between the protrusion 38 and the radially outer end 42 of the slot 40. This prevents the protrusion 38 from engaging the radially outer end 42 of the slot 40 and displacing the cartridge 12 in a radial direction (i.e., in an upward direction when viewing FIGS. 7A and 7C) when the cylindrical body 31 is rotated. When the cylindrical body 31 is completely rotated in one direction or another, the protrusion 38 engages a radially inner end 43 of the slot 40 to push the cartridge 12 radially inward into the cartridge pocket 11 (as illustrated in FIGS. 7A and 7C). The resultant cam device 30 is adapted to move the cartridge 12 in opposite or opposing directions (i.e., laterally back and forth, or from right to left, or vice versa, when viewing FIGS. 7A through 7C) totally independent of any other manual displacement.

A radially outer portion of the cartridge 12 should, in a conventional manner, be provided with a seat or insert pocket for the location of the cutting insert 17. As shown in FIG. 3, the insert 17 is in this case provided with a central aperture 44 for the receipt of the conical head 45 of a centrally provided clamp screw 46 which is threadably engaged in a correspondingly threaded bore 47 in the cartridge 12. The central aperture 44 of the insert 17 has a decreasing cross-section towards a bottom surface 48 of the insert 17. The head of the clamp screw 46 should be pre-loaded, in a conventional manner, to locate the insert 17 in the insert pocket when tightening the clamp screw 46.

The cartridges 12 could, at different positions around the milling cutter body 10, be provided with inserts 17 located in different orientations, such as shown in FIGS. 1 - 3. It should be appreciated by one skilled in art that based upon the foregoing, the inserts 17 could be located in orientations different than those illustrated. It should further be appreciated that the inserts 17 could also be indexable (i.e., the inserts 17 could be rotated and/or flipped over to expose different cutting edges). One common feature of all these cartridges 12 is that the insert 17 has a central aperture 44 for the receipt of a clamp screw 46 engaging therein. It will also be appreciated that the insert and cartridge may be formed as a unitary construction.

As shown in FIG. 3, the wedge-shaped portion 12a of the cartridge 12 is provided with a cartridge angle α that is the sum of the angles of the front and rear surfaces 21 and 16 of the cartridge 12. For example, the front surface 21 of the cartridge 12 may be provided with an angle β in the range of 0 degrees to 20 degrees, and preferably about 8 degrees. The rear surface 16 of the cartridge 12 may be provided with an angle γ in the range of 5 degrees to 45 degrees, and preferably about 9 degrees. The resultant cartridge angle α is in the range of 5 degrees to 65 degrees, and preferably about 17 degrees. The resultant shape of the wedge-shaped portion 12a is that of a dovetail, which helps prevent the cartridge 12 from escaping radially from the cartridge pocket 11.

Note that the angle δ between the rearward wall 14 and the bottom wall 15 of the cartridge pocket 11 is an acute angle. The angle δ is in the range of 45 degrees to 89 degrees, and preferably about 80 degrees. This is to insure that the cartridge 12 will also be driven radially inward and rearward into the cartridge pocket 11.

A gap should be provided between the cartridge 12 and cutter body pocket 11 near a radially inward portion of the rear surface 16 of the cartridge 12. If the angle γ of the rear surface 16 of the cartridge 12 is about 9 degrees and the angle δ of the rearward wall 14 of the cartridge pocket 11 is about 80 degrees relative to the bottom wall 15 of the cartridge pocket 11, a gap will be provided between the radially inward portion of the rear surface 16 of the cartridge 12 and cutter body pocket 11. The gap should be continued into the radii of the rounded corners 27 and 28 between the rearward and bottom walls 14 and 15 of the cartridge pocket 11 and the rear and bottom surfaces 26 of the cartridge 12. This could be accomplished if the radius of the corner 27 between the rearward and bottom walls 14 and 15 of the cartridge pocket 11 is smaller than the radius 28 between the rear and bottom surfaces 16 and 26 of the cartridge 12. This gap is to assure that the radially outward portion of surface 16 of the cartridge 12 always makes contact with the radially outward portion of surface 14 of the cartridge pocket 11.

Continuing with FIG. 3, there is illustrated a gap between the front surface 21 of the cartridge 12 and a radially inward portion of the rear wedge surface 20. This insures that a radially outward portion of the clamping wedge 18 engages the front surface 21 of the cartridge 12 to drive the cartridge 12 radially inward and rearward into the cartridge pocket 11. To this end, the central axis S₁ of the clamp screw 22 should not be radially oriented in relation to the central axis C of rotation of the cutter body 10. The central axis S₁ should be parallel to the plane of the forward wedge surface 19. The front surface 21 of the cartridge 12 forms an acute angle ε with the central axis S₁ and the plane of the forward wedge surface 19. The angle ε is in the range of 5 degrees to 65 degrees, and preferably about 18 degrees. As stated above, the resultant wedge angle θ is preferably about 17 degrees. The disparity in the two angles ε and θ provides a gap between the front surface 21 of the cartridge 12 and the radially inward portion of the rear wedge surface 20.

In operation, the clamp screw 22 of the clamping wedge 18 is loosened to loosen the clamping wedge 18 sufficiently to adjust the cartridge 12 in the cartridge pocket 11. With the clamping wedge 18 loosened, the cam device 30 may adjust the position of the cartridge 12 by rotating the cylindrical body member 31 accordingly. The cutter body 10 may support left-handed cartridges 12 (at the top when viewing FIGS. 7A through 7C) and right-handed cartridges 12 (at the bottom when viewing FIGS. 7A through 7C). When the cylindrical body member 31 at the top of FIG. 7A is rotated completely in a clockwise direction, the left-handed cartridge 12' is at its maximum cutting position (i.e., to the right when viewing FIG. 7A). Similarly, when the cylindrical body member 31 at the bottom of FIG. 7A is rotated completely in a counter-clockwise direction, the right-handed cartridge 12 is at its maximum cutting position (i.e., to the left when viewing FIG. 7A). In these positions, the two cartridges 12' and 12 can cooperatively cut a maximum width slot W_{MAX}. Conversely, when the cylindrical body member 31 at the top of FIG. 7C is rotated completely in a counter-clockwise direction, the left-handed cartridge 12' is at its minimum cutting position (i.e., to the left when viewing FIG. 7C). Similarly, when the cylindrical body member 31 at the bottom of FIG. 7C is rotated completely in a clockwise direction, the right-handed cartridge 12 is at its minimum cutting position (i.e., to the right when viewing FIG. 7C). In these positions, the two cartridges 12' and 12 can cooperatively cut a minimum width slot W_{MIN}. In FIG. 7B, the cylindrical bodies 31 are rotated so that the eccentric protrusion 38 is located at top dead center. In these positions, the cartridges 12' and 12 are moved to a position intermediate the minimum and maximum cutting positions shown in FIGS. 7A and 7C.

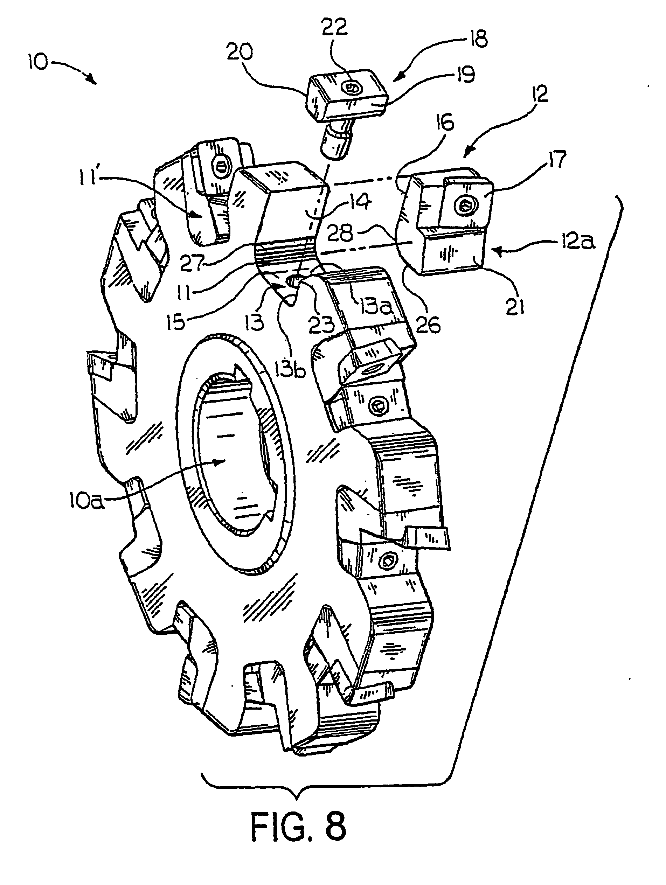

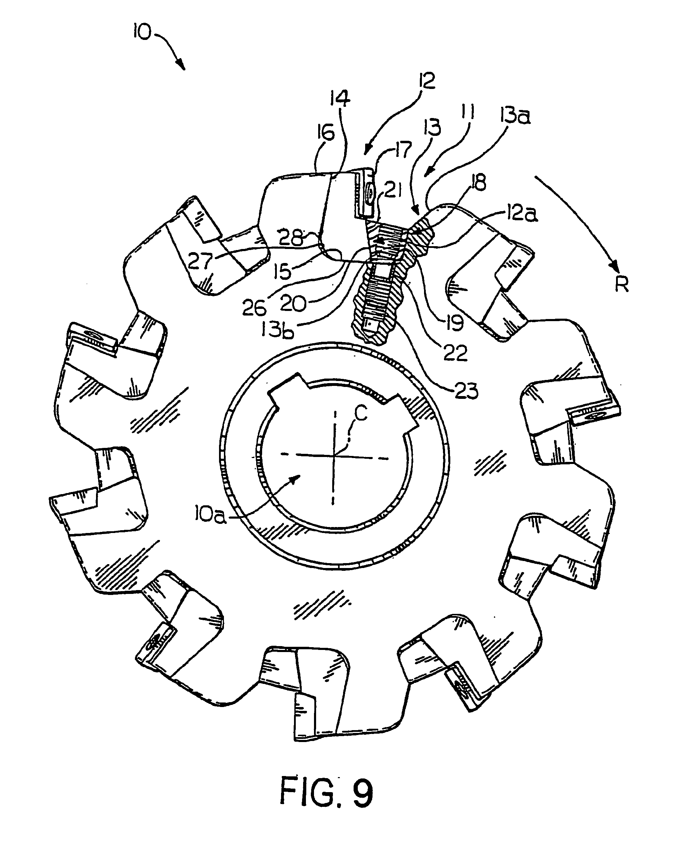

FIGS. 8 - 10 show a milling cutter which does not fall under the scope of the claims but which is provided as an example useful for understanding the invention, wherein like numerals designate like components throughout all of the several figures. A cutter body of a rotary milling cutter or slotter is denoted by reference numeral 10. The milling cutter body 10 is arranged for rotation around the central axis C in direction R (i.e., in a clockwise direction when viewing FIG. 9). The milling cutter body 10 has a central core portion 10a and a plurality of circumferentially spaced, radially outwardly open recesses or cartridge pockets 11 located in an outer periphery of the body 10. The cartridge pockets 11 are provided for the receipt of cartridge assemblies including partially wedge-shaped cartridges 12 (i.e., insert cartridges) and clamping wedges 18 more fully described below.

The cartridge pockets 11 are evenly distributed along the periphery of the cutter body 10. In the milling cutter shown, ten cartridge pockets 11 are provided. It is to be understood, however, that the cartridge pockets 11 in certain cases can be unevenly distributed around the periphery of the milling cutter body. Moreover, a greater or lesser number of cartridge pockets 11 can be provided.

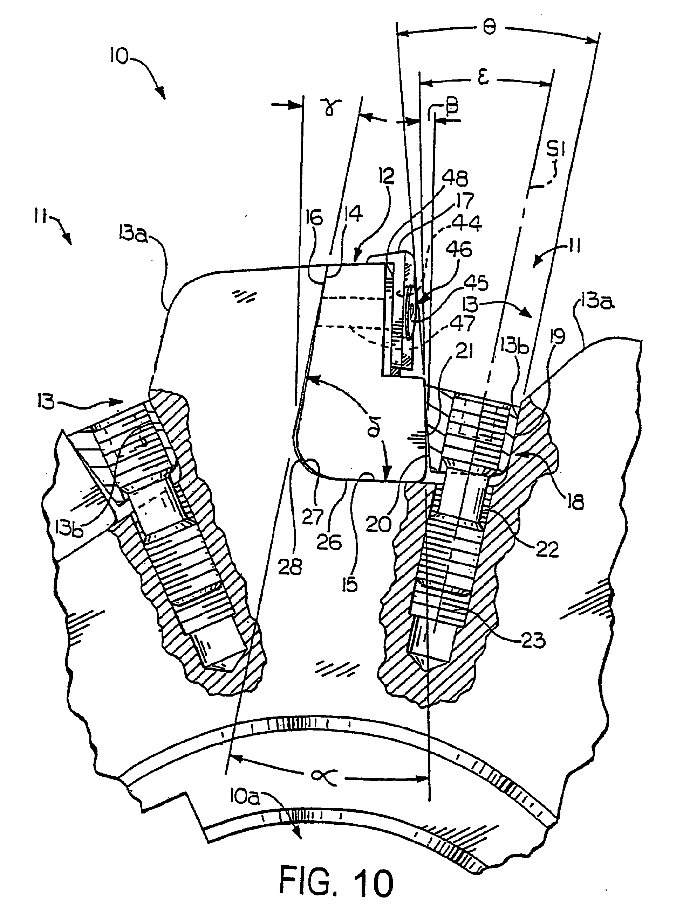

A leading or forward wall 13 of each cartridge pocket 11, as seen in the rotary direction R, comprises two surfaces 13a and 13b. The surfaces 13a and 13b may be arranged at an angle relative to each other or the surfaces 13a and 13b may be coplanar. A trailing or rearward wall 14 of the cartridge pocket 11 has a generally flat surface. A bottom of the cartridge pocket 11 is defined by a bottom wall 15, which extends between the forward and rearward walls 13 and 14. The rearward wall 14 of the cartridge pocket 11 is adapted to engage a rear surface 16 of the cartridge 12. The bottom wall 15 of the cartridge pocket 11 is arranged at an angle greater than 90 degrees relative to a radially inner surface 13b of the forward wall 13 of the cartridge pocket 11. The bottom wall 15 is oriented at an angle δ (shown in FIG. 10) less than 90 degrees relative to the rear wall 14 of the same cartridge pocket 11.

The wedge shaped cartridges 12 are of a width (i.e., the dimension parallel to a central axis C (shown in FIG. 9) of rotation of the body 10) in one case, less than the width of the milling cutter body 10 or, in a preferred case equivalent to the entire width of the milling cutter body 10. A radially inner wedge-shaped portion of the cartridge is denoted by numeral 12a (shown in FIG. 9).

The cartridge assembly includes a clamping means for the cartridge 12 in the form of a clamping wedge 18 arranged radially inward of a cutting edge of an insert 17 when the insert is seated on the cartridge 12. A leading or forward wedge surface 19 of the wedge 18 (with reference to the rotary direction R) is arranged in abutment with the radially inner surface 13b of the forward wall 13 of the cartridge pocket 11. A trailing or rear wedge surface 20 of the wedge 18 is arranged in abutment with a leading or front surface 21 of the cartridge 12. The wedge 18 is displaced along the surface 13b of the forward wall 13 of the cartridge pocket 11 upon tightening a fastener such as a threaded clamp screw 22. The screw 22 is threadably engaged in a corresponding threaded bore 23 in the cartridge pocket 11. The bore 23 can extend all the way through to the core portion 10a of the cutter body 10. The clamp screw 22 is provided with right hand threads along the bottom of the screw and left hand threads along the top of the screw so that the clamp wedge 18 can be positively displaced in both the clamping and unclamping directions (i.e., in opposing radial directions when viewing FIG. 8) as the clamp screw is threaded or unthreaded within the block. Loosening of the cartridge 12 is accomplished by an unscrewing of the clamp screw 22.

The bottom surface 26 of the cartridge 12 is shaped to correspond with the bottom wall 15 of the cartridge pocket 11. When the cartridge 12 is installed in the cartridge pocket 11, the bottom wall 15 of the cartridge pocket 11 engages the bottom surface 26 of the cartridge 12. In a preferred embodiment, in order to reduce stress sustained by the cutter body 10 during rotation of the cutter body and the cutting process, the rearward and bottom walls 14 and 15 of the cartridge pocket 11 and the rear and bottom surfaces 16 and 26 of the cartridge 12 intersect at rounded corners 27 and 28. The radii of the corners 27 and 28 are limited by seating surface 26 of the cartridge and bottom wall 15 of the pocket

A radially outer portion of the cartridge 12 should, in a conventional manner, be provided with a seat or insert pocket for the location of the cutting insert 17. As shown in FIG. 10, the insert 17 is in this case provided with a central aperture 44 for the receipt of the conical head 45 of a centrally provided clamp screw 46 which is threadably engaged in a correspondingly threaded bore 47 in the cartridge 12. The central aperture 44 of the insert 17 has a decreasing cross-section towards a bottom surface 48 of the insert 17. The head of the clamp screw 46 should be pre-loaded, in a conventional manner, to locate the insert 17 in the insert pocket when tightening the clamp screw 46.

The cartridges 12 could, at different positions around the milling cutter body 10, be provided with inserts 17 located in different orientations, such as shown in FIGS. 8 - 10. It should be appreciated by one skilled in art that based upon the foregoing, the inserts 17 could be located in orientations different than those illustrated. It should further be appreciated that the inserts 17 could also be indexable (i.e., the inserts 17 could be rotated and/or flipped over to expose different cutting edges). One common feature of all these cartridges 12 is that the insert 17 has a central aperture 44 for the receipt of a clamp screw 46 engaging therein. It will also be appreciated that the insert and cartridge may be formed as a unitary construction. It will be appreciated that the insert and cartridge may be formed as a unitary construction.

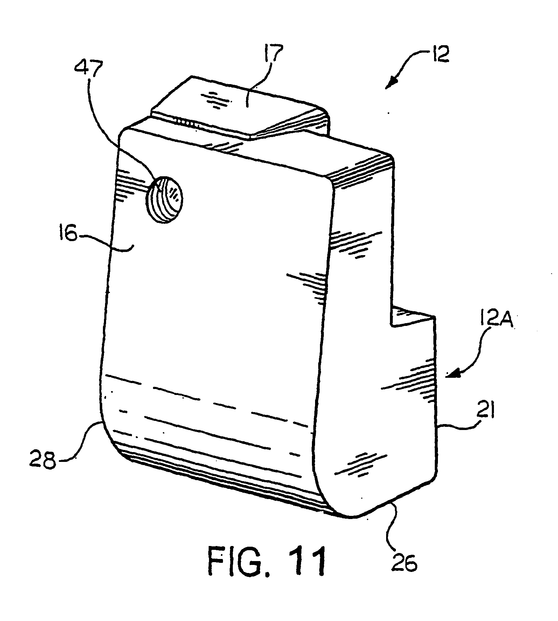

As shown in FIGS. 10 and 11, the wedge-shaped portion 12a of the cartridge 12 is provided with a cartridge angle α that is the sum of the angles of the front and rear surfaces 21 and 16 of the cartridge 12. For example, the front surface 21 of the cartridge 12 may be provided with an angler β in the range of 0 degrees to 20 degrees, and preferably about 4 degrees. The rear surface 16 of the cartridge 12 may be provided with an angle γ in the range of 5 degrees to 45 degrees, and preferably about 9 degrees. The resultant cartridge angle α is in the range of 5 degrees to 65 degrees, and preferably about 13 degrees. The resultant shape of the wedge-shaped portion 12a is that of a dovetail, which helps prevent the cartridge 12 from escaping radially from the cartridge pocket 11.

Note that the angle δ between the rearward wall 14 and the bottom wall 15 of the cartridge pocket 11 is an acute angle. The angle δ is in the range of 45 degrees to 89 degrees, and preferably about 80 degrees. This is to insure that the cartridge 12 will also be driven radially inward and rearward into the cartridge pocket 11.

A gap should be provided between the cartridge 12 and cutter body pocket 11 near a radially inward portion of the rear surface 16 of the cartridge 12. If the angle γ of the rear surface 16 of the cartridge 12 is about 10 degrees and the angle δ of the rearward wall 14 of the cartridge pocket 11 is about 80 degrees relative to the bottom wall 15 of the cartridge pocket 11, a gap will be provided between the radially inward portion of the rear surface 16 of the cartridge 12 and cutter body pocket 11. The gap should be continued into the radii of the rounded corners 27 and 28 between the rearward and bottom walls 14 and 15 of the cartridge pocket 11 and the rear and bottom surfaces 26 of the cartridge 12. This could be accomplished if the radius of the corner 27 between the rearward and bottom walls 14 and 15 of the cartridge pocket 11 is smaller than the radius 28 between the rear and bottom surfaces 16 and 26 of the cartridge 12. This gap is to assure that the radially outward portion of surface 16 of the cartridge 12 always makes contact with the radially outward portion of surface 14 of the cartridge pocket 11.

Continuing with FIG. 10, there is illustrated a gap between the front surface 21 of the cartridge 12 and a radially inward portion of the rear wedge surface 20. This insures that a radially outward portion of the clamping wedge 18 engages the front surface 21 of the cartridge 12 to drive the cartridge 12 radially inward and rearward into the cartridge pocket 11. To this end, the central axis S₁ of the clamp screw 22 should not be radially oriented in relation to the central axis C of rotation of the cutter body 10. The central axis S₁ should be parallel to the plane of the forward wedge surface 19. The front surface 21 of the cartridge 12 forms an acute angle ε with the central axis S₁ and the plane of the forward wedge surface 19. The angle e is in the range of 5 degrees to 65 degrees, and preferably about 14 degrees. As stated above, the resultant wedge angle θ is preferably about 15 degrees. The disparity in the two angles ε and θ provides a gap between the front surface 21 of the cartridge 12 and the radially inward portion of the rear wedge surface 20.

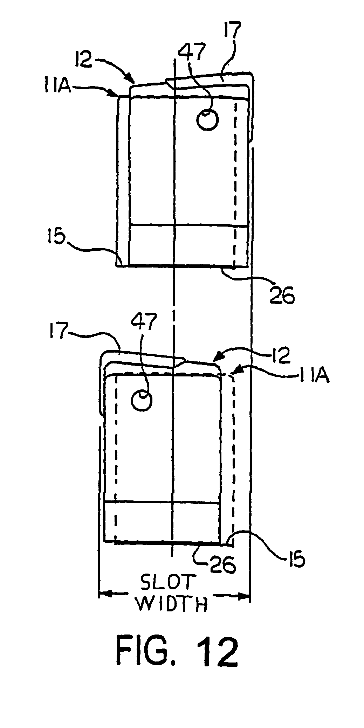

In operation, the clamp screw 22 of the clamping wedge 18 is loosened to loosen the clamping wedge 18 sufficiently to adjust the cartridge 12 in the cartridge pocket 11. The cutter body 10 may support left-handed cartridges 12 (at the top when viewing FIG. 12) and right-handed cartridges 12 (at the bottom when viewing FIG 12).

## Claims

1. A cutting tool comprising:
a cutter body (10) having at least one cartridge pocket (11) therein adapted to receive a cutting insert cartridge (12), the cutting insert cartridge including a slot (40) in communication with a bore (29) in the cutter body; and
a position-adjusting device (30) rotatably moveable with respect to the bore (29), the position-adjusting device (30) including a body member (31) and an eccentric protrusion (38) extending from the body member (31), the eccentric protrusion engaging the slot (40) of the cutting insert cartridge (12),
wherein the position-adjusting device (30) is rotatable to cause the eccentric protrusion (38) to displace the cutting insert cartridge (12) with respect to the cutter body (10),
**characterized in that** said bore (29) is a thru-bore in the cutter body (10) and said position adjusting device is axially fixed in said thru-bore (29), and
said slot (40) is dimensioned to limit rotation of the position-adjusting device (30).

2. The cutting tool of claim 1, wherein the position-adjusting device (30) is rotatable in opposing directions to displace the protrusion (38) within the slot (40) and to move cutting insert cartridge (12) in opposing lateral directions with respect to the cutter body (10).

3. The cutting tool of claim 1 or 2, wherein the body member (31) is held in a fixed axial relation to the thru-bore (29) by a snap ring (35) and a flange (36).

4. The cutting tool of claim 1, 2 or 3. wherein the slot (40) is dimensioned to limit displacement of the position-adjusting device (30) to about 180 degrees.

5. The cutting tool of claim 3, wherein the cutting insert cartridge (12) further includes a recess (39) for receiving the flange (36).

6. The cutting tool of any one of the claims 1 to 5, further comprising clamping means (18) for clamping the cutting insert cartridge (12) in the at least one cartridge pocket (11).

7. The cutting tool of claim 6, wherein the clamping means comprises a clamping wedge (18).

8. The cutting tool of claim 7, wherein the clamping wedge (18) has a dove tail shape for preventing the cutting insert cartridge (12) from moving radially when mounted in the at least one cartridge pocket (11).

9. The cutting tool of claim 8, wherein the clamping wedge (18) includes a forward wedge surface (19) being in abutment with the at least one cartridge pocket (11), and a rear wedge surface (20) in abutment with the cutting insert cartridge (12).

10. The cutting tool of any one of the claims 1 to 9, wherein the at least one cartridge pocket (11) includes a forward wall (13), a rearward wall (14) and a bottom wall (15), the bottom wall (15) extending between the forward wall (13) and the rearward wall (14) and being arranged at an angle greater than 90 degrees relative to the forward wall. (13) and being arranged at an angle less than 90 degrees relative to the rearward wall (14).

11. The cutting tool of claim 10, wherein the at least one cartridge pocket (11) includes a threaded bore (23) for receiving a fastener (22), wherein the fastener (22) is in communication with the clamping wedge (18) in such a way that the clamping wedge (18) may be moved along the forward wall (13) of the at least one cartridge pocket (11) between a clamped position and an unclamped position by rotation of the fastener (22).

12. The cutting tool of claim 11, wherein a central axis (S₁) of the fastener (22) is not radially oriented in relation to a central axis (C) of the cutter body (10).

13. The cutting tool of claim 12, wherein the central axis (S₁) is parallel to a plane formed by the forward wedge surface (19).

14. The cutting tool of claim 13, wherein an acute angle (ε) is formed between a front surface (21) of the cutting insert cartridge (12) and the central axis (S₁).

15. The cutting tool of claim 14, wherein the acute angle (ε) is in the range of 5 degrees to 65 degrees.

16. The cutting tool of claim 10, wherein the rearward wall (14) and the bottom wall (15) of the at least one cartridge pocket (11) form an acute angle (δ).

17. The cutting tool of claim 16. wherein the angle (δ) is in the range of 45 degrees to 89 degrees.

18. The cutting tool of any one of the claims 10 to 17, wherein the cutting insert cartridge (12) includes a front surface (21), a rear surface (16) and a bottom surface (26), the bottom surface (26) being shaped to correspond to the bottom wall (15) of the at least one cartridge pocket (11), and the rear surface (16) being shaped to correspond to the rearward wall (14) of the at least one cartridge pocket (11).

19. The cutting tool of claim 18, wherein the cutting insert cartridge (12) includes a cartridge angle (α) as defined by an angle formed between the front surface (21) of the cutting insert cartridge (12) and the rear surface (16) of the cutting insert cartridge (12).

20. The cutting tool of claim 19, wherein an angle (β) in the range of 0 degrees to 20 (12) and is defined between the front surface (21) of the cutting insert cartridge (12) and a line perpendicular to the bottom wall (15) of the at least one cartridge pocket (11).

21. The cutting tool of claim 19, wherein the cartridge angle (α) is in the range of 5 degrees to 65 degrees.

22. The cutting tool of claim 18, wherein a gap in a radially inward direction is formed between the front surface (21) of the cutting insert cartridge (12) and a radially inward portion of the rear wedge surface (20) of the clamping wedge (18).

23. The cutting tool of any one of the claims 1 to 22, wherein a gap is formed between a lower portion of the cutting insert cartridge (12) and the at least one cartridge pocket (11).

24. The cutting tool of any one of the claims 1 to 23, wherein the body member (31) has a tool engaging end (32) with a tool engaging recess (41) adapted to receive a tool (T) for rotating the body member (31).

## Patentansprüche

1. Schneidwerkzeug, umfassend:
einen Fräserkörper (10) mit mindestens einer Patronentasche (11) darin, die zur Aufnahme einer Schneideinsatzpatrone (12) ausgeführt ist, wobei die Schneideinsatzpatrone einen Schlitz (40) enthält, der mit einer Bohrung (29) in dem Fräserkörper in Verbindung steht; und
eine Positionseinstellungsvorrichtung (30), die bezüglich der Bohrung (29) drehbeweglich ist, wobei die Positionseinstellungsvorrichtung (30) ein Körperglied (31) und einen exzentrischen Vorsprung (38) enthält, der sich von dem Körperglied (31) erstreckt, wobei der exzentrische Vorsprung den Schlitz (40) der Schneideinsatzpatrone (12) in Eingriff nimmt,
wobei die Positionseinstellungsvorrichtung (30) drehbar ist, um zu bewirken, dass der exzentrische Vorsprung (38) die Schneideinsatzpatrone (12) bezüglich des Fräserkörpers (10) verschiebt,
**dadurch gekennzeichnet, dass** die Bohrung (29) eine Durchgangsbohrung in dem Fräserkörper (10) ist und die Positionseinstellungsvorrichtung (30) in der Durchgangsbohrung (29) axial festgelegt ist, und
der Schlitz (40) dazu dimensioniert ist, Drehung der Positionseinstellungsvorrichtung (30) zu begrenzen.

2. Schneidwerkzeug nach Anspruch 1, wobei die Positionseinstellungsvorrichtung (30) in entgegengesetzten Richtungen drehbar ist, um den Vorsprung (38) in dem Schlitz (40) zu verschieben und die Schneideinsatzpatrone (12) in entgegengesetzten Querrichtungen bezüglich des Fräserkörpers (10) zu bewegen.

3. Schneidwerkzeug nach Anspruch 1 oder 2, wobei das Körperglied (31) durch einen Sprengring (35) und einen Flansch (36) in einer festgelegten Axialbeziehung bezüglich der Durchgangsbohrung (29) gehalten wird.

4. Schneidwerkzeug nach Anspruch 1, 2 oder 3, wobei der Schlitz (40) dazu dimensioniert ist, Verschiebung der Positionseinstellungsvorrichtung (30) auf ca. 180 Grad zu begrenzen.

5. Schneidwerkzeug nach Anspruch 3, wobei die Schneideinsatzpatrone (12) weiterhin eine Aussparung (39) zur Aufnahme des Flansches (36) enthält.

6. Schneidwerkzeug nach einem der Ansprüche 1 bis 5, das weiterhin ein Klemmmittel (18) zum Festklemmen der Schneideinsatzpatrone (12) in der mindestens einen Patronentasche (11) umfasst.

7. Schneidwerkzeug nach Anspruch 6, wobei das Klemmmittel einen Klemmkeil (18) umfasst.

8. Schneidwerkzeug nach Anspruch 7, wobei der Klemmkeil (18) eine Schwalbenschwanzform zum Verhindern, dass sich die Schneideinsatzpatrone (12) radial bewegt, wenn sie in der mindestens einen Patronentasche (11) angebracht ist, aufweist.

9. Schneidwerkzeug nach Anspruch 8, wobei der Klemmkeil (18) eine vordere Keilfläche (19), die an der mindestens einen Patronentasche (11) anliegt, und eine hintere Keilfläche (20) in Anlage an der Schneideinsatzpatrone (12) enthält.

10. Schneidwerkzeug nach einem der Ansprüche 1 bis 9, wobei die mindestens eine Patronentasche (11) eine vordere Wand (13), eine Rückwand (14) und eine untere Wand (15) enthält, wobei sich die untere Wand (15) zwischen der vorderen Wand (13) und der Rückwand (14) erstreckt und in einem Winkel von über 90 Grad bezüglich der vorderen Wand (13) sowie in einem Winkel von unter 90 Grad bezüglich der Rückwand (14) angeordnet ist.

11. Schneidwerkzeug nach Anspruch 10, wobei die mindestens eine Patronentasche (11) eine Gewindebohrung (23) zur Aufnahme eines Befestigungselements (22) enthält, wobei das Befestigungselement (22) mit dem Klemmkeil (18) in Verbindung steht, so dass der Klemmkeil (18) durch Drehung des Befestigungselements (22) entlang der vorderen Wand (13) der mindestens einen Patronentasche (11) zwischen einer festgeklemmten Position und einer nicht festgeklemmten Position bewegt werden kann.

12. Schneidwerkzeug nach Anspruch 11, wobei eine mittlere Achse (S₁) des Befestigungselements (22) bezüglich einer mittleren Achse (C) des Fräserkörpers (10) nicht radial ausgerichtet ist.

13. Schneidwerkzeug nach Anspruch 12, wobei die mittlere Achse (S₁) parallel zu einer durch die vordere Keilfläche (19) gebildeten Ebene verläuft.

14. Schneidwerkzeug nach Anspruch 13, wobei ein spitzer Winkel (ε) zwischen einer Vorderseite (21) der Schneideinsatzpatrone (12) und der mittleren Achse (S₁) gebildet wird.

15. Schneidwerkzeug nach Anspruch 14, wobei der spitze Winkel (ε) in einem Bereich von 5 Grad bis 65 Grad liegt.

16. Schneidwerkzeug nach Anspruch 10, wobei die Rückwand (14) und die untere Wand (15) der mindestens einen Patronentasche (11) einen spitzen Winkel (δ) bilden.

17. Schneidwerkzeug nach Anspruch 16, wobei der Winkel (δ) in einem Bereich von 45 Grad bis 89 Grad liegt.

18. Schneidwerkzeug nach einem der Ansprüche 10 bis 17, wobei die Schneideinsatzpatrone (12) eine Vorderseite (21), eine Rückseite (16) und eine Unterseite (26) enthält, wobei die Unterseite (26) dazu geformt ist, der unteren Wand (15) der mindestens einen Patronentasche (11) zu entsprechen, und die Rückseite (16) dazu geformt ist, der Rückwand (14) der mindestens einen Patronentasche (11) zu entsprechen.

19. Schneidwerkzeug nach Anspruch 18, wobei die Schneideinsatzpatrone (12) einen Patronenwinkel (a), wie durch einen zwischen der Vorderseite (21) der Schneideinsatzpatrone (12) und der Rückseite (16) der Schneideinsatzpatrone (12) gebildeten Winkel definiert, enthält.

20. Schneidwerkzeug nach Anspruch 19, wobei ein Winkel (β) in einem Bereich von 0 Grad bis 20 Grad zwischen der Vorderseite (21) der Schneideinsatzpatrone (12) und einer senkrecht zu der unteren Wand (15) der mindestens einen Patronentasche (11) verlaufenden Linie definiert wird.

21. Schneidwerkzeug nach Anspruch 19, wobei der Patronenwinkel (α) in einem Bereich von 5 Grad bis 65 Grad liegt.

22. Schneidwerkzeug nach Anspruch 18, wobei ein Spalt in einer radial nach innen verlaufenden Richtung zwischen der Vorderseite (21) der Schneideinsatzpatrone (12) und einem radial nach innen verlaufenden Teil der hinteren Keilfläche (20) des Klemmkeils (18) gebildet wird.

23. Schneidwerkzeug nach einem der Ansprüche 1 bis 22, wobei ein Spalt zwischen einem unteren Teil der Schneideinsatzpatrone (12) und der mindestens einen Patronentasche (11) gebildet wird.

24. Schneidwerkzeug nach einem der Ansprüche 1 bis 23, wobei das Körperglied (31) ein Werkzeugeingriffsende (32) mit einer Werkzeugeingriffsaussparung (41) aufweist, die zur Aufnahme eines Werkzeugs (T) zum Drehen des Körperglieds (31) ausgeführt ist.

## Revendications

1. Outil de coupe comprenant :
un corps de fraise (10) doté d'au moins une poche à cartouche (11) adaptée à accueillir une cartouche d'insert de coupe (12), la cartouche d'insert de coupe comprenant une rainure (40) en communication avec un alésage (29) pratiqué dans le corps de fraise ; et
un dispositif de réglage de position (30) pouvant tourner par rapport à l'alésage (29), le dispositif de réglage de position (30) comprenant un élément de corps (31) et une saillie excentrique (38) s'étendant à partir de l'élément de corps (31), la saillie excentrique s'engageant dans la rainure (40) de la cartouche d'insert de coupe (12),
dans lequel le dispositif de réglage de position (30) peut tourner pour faire que la saillie excentrique (38) déplace la cartouche d'insert de coupe (12) par rapport au corps de fraise (10),
**caractérisé en ce que** ledit alésage (29) est un alésage traversant pratiqué dans le corps de fraise (10), que ledit dispositif de réglage de position est fixé axialement dans ledit alésage traversant (29), et
que ladite rainure (40) est dimensionnée de manière à limiter la rotation du dispositif de réglage de position (30).

2. Outil de coupe selon la revendication 1, dans lequel le dispositif de réglage de position (30) peut tourner dans des directions opposées pour déplacer la saillie (38) dans la rainure (40) et pour déplacer la cartouche d'insert de coupe (12) dans des directions latérales opposées par rapport au corps de fraise (10).

3. Outil de coupe selon les revendications 1 ou 2, dans lequel l'élément de corps (31) est retenu dans une relation axiale fixe par rapport à l'alésage traversant (29) au moyen d'un circlip (35) et d'une bride (36).

4. Outil de coupe selon les revendications 1, 2 ou 3, dans lequel la rainure (40) est dimensionnée de manière à limiter la course du dispositif de réglage de position (30) à environ 180 degrés.

5. Outil de coupe selon la revendication 3, dans lequel la cartouche d'insert de coupe (12) comprend en outre une découpe (39) pour accueillir la bride (36).

6. Outil de coupe selon l'une quelconque des revendications 1 à 5, comprenant en outre un moyen de serrage (18) pour serrer la cartouche d'insert de coupe (12) dans l'au moins une poche à cartouche (11).

7. Outil de coupe selon la revendication 6, dans lequel le moyen de serrage comprend un coin de serrage (18).

8. Outil de coupe selon la revendication 7, dans lequel le coin de serrage (18) a une forme en queue d'aronde pour empêcher que la cartouche d'insert de coupe (12) puisse se déplacer radialement quand elle est montée dans l'au moins une poche à cartouche (11).

9. Outil de coupe selon la revendication 8, dans lequel le coin de serrage (18) comprend une surface avant de coin (19) qui est en butée contre l'au moins une poche à cartouche (11) et une surface arrière de coin (20) qui est en butée contre la cartouche d'insert de coupe (12).

10. Outil de coupe selon l'une quelconque des revendications 1 à 9, dans lequel l'au moins une poche à cartouche (11) comprend une paroi avant (13), une paroi arrière (14) et une paroi de fond (15), la paroi de fond (15) s'étendant entre la paroi avant (13) et la paroi arrière (14) et étant agencée à un angle supérieur à 90 degrés par rapport à la paroi avant (13) et étant agencée à un angle inférieur à 90 degrés par rapport à la paroi arrière (14).

11. Outil de coupe selon la revendication 10, dans lequel l'au moins une poche à cartouche (11) comprend un alésage fileté (23) pour accueillir une fixation (22), la fixation (22) étant en communication avec le coin de serrage (18) de manière à ce que le coin de serrage (18) puisse être déplacé le long de la paroi avant (13) de l'au moins une poche à cartouche (11), entre une position serrée et une position desserrée, par la rotation de la fixation (22).

12. Outil de coupe selon la revendication 11, dans lequel l'axe central (S₁) de la fixation (22) n'est pas orienté radialement par rapport à l'axe central (C) du corps de fraise (10).

13. Outil de coupe selon la revendication 12, dans lequel l'axe central (S₁) est parallèle à un plan formé par la surface avant de coin (19).

14. Outil de coupe selon la revendication 13, dans lequel un angle aigu (ε) est décrit entre une surface avant (21) de la cartouche d'insert de coupe (12) et l'axe central (S₁).

15. Outil de coupe selon la revendication 14, dans lequel l'angle aigu (ε) est compris dans une fourchette de 5 degrés à 65 degrés.

16. Outil de coupe selon la revendication 10, dans lequel la paroi arrière (14) et la paroi de fond (15) de l'au moins une poche à cartouche (11) décrivent un angle aigu (δ)

17. Outil de coupe selon la revendication 16, dans lequel l'angle aigu (δ) est compris dans une fourchette de 45 degrés à 89 degrés.

18. Outil de coupe selon l'une quelconque des revendications 10 à 17, dans lequel la cartouche d'insert de coupe (12) comprend une surface avant (21), une surface arrière (16) et une surface de fond (26), la surface de fond (26) étant formée de manière à correspondre à la paroi de fond (15) de l'au moins une poche à cartouche (11), et la surface arrière (16) étant formée de manière à correspondre à la paroi arrière (14) de l'au moins une poche à cartouche (11).

19. Outil de coupe selon la revendication 18, dans lequel la cartouche d'insert de coupe (12) comprend un angle de cartouche (α) tel que défini par un angle décrit entre la surface avant (21) de la cartouche d'insert de coupe (12) et la surface arrière (16) de la cartouche d'insert de coupe (12).

20. Outil de coupe selon la revendication 19, dans lequel un angle (β) compris dans une fourchette de 0 degré à 20 degrés est décrit entre la surface avant (21) de la cartouche d'insert de coupe (12) et une ligne perpendiculaire à la paroi de fond (15) de l'au moins une poche à cartouche (11).

21. Outil de coupe selon la revendication 19, dans lequel l'angle de cartouche (α) est compris dans une fourchette de 5 degrés à 65 degrés.

22. Outil de coupe selon la revendication 18, dans lequel un espace orienté dans une direction radialement intérieure est formé entre la surface avant (21) de la cartouche d'insert de coupe (12) et une partie radialement intérieure de la surface arrière de coin (20) du coin de serrage (18).

23. Outil de coupe selon l'une quelconque des revendications 1 à 22, dans lequel un espace est formé entre une partie inférieure de la cartouche d'insert de coupe (12) et l'au moins une poche à cartouche (11).

24. Outil de coupe selon l'une quelconque des revendications 1 à 23, dans lequel l'élément de corps (31) comprend une extrémité de mise en engagement d'un outil (32) avec une découpe de mise en engagement d'un outil (41) adaptée à accueillir un outil (T), servant à faire tourner l'élément de corps (31).
